# EUROPEAN PATENT SPECIFICATION

(11) **EP 2 679 369 B1**
(45) Date of publication and mention of the grant of the patent: **15.01.2020**
(21) Application number: 11859318.5
(22) Date of filing: 22.06.2011
(51) Int. Cl.: B29D 30/58, B29D 30/54, B29C 33/02, B29C 35/02, B29D 30/06

(54) **MANUFACTURING METHOD FOR TIRE**
VERFAHREN ZUR HERSTELLUNG EINES REIFENS
PROCÉDÉ DE FABRICATION D'UN PNEU

(30) Priority: 23.02.2011 JP 2011037706
(43) Date of publication of application: 01.01.2014
(73) Proprietor: Kabushiki Kaisha Bridgestone, Chuo-ku, Tokyo 104-8340 (JP)
(72) Inventor: KANEDA Hideyuki, Kodaira-shi Tokyo 187-8531 (JP)
(74) Representative: Lamb, Martin John Carstairs
(86) International application number: PCT/JP2011/064266
(87) International publication number: WO 2012/114549

(56) References cited:
- EP-A1- 2 468 469
- EP-A2- 0 729 825
- WO-A1-2008/054387
- WO-A1-2011/021695
- JP-A- 7 195 370
- JP-A- 8 174 554
- JP-A- 10 193 472
- JP-A- 2002 172 624
- JP-A- 2005 238 589
- JP-A- 2006 035 615
- JP-A- 2009 051 158
- JP-A- 2011 020 508
- US-A- 2 046 372
- US-A- 2 966 936
- US-A- 4 568 259

## Description

### TECHNICAL FIELD

The present invention relates to a method for manufacturing a base tire to which a tread is attached in a subsequent process and, more particularly, to a method for manufacturing a tire using a base tire manufactured by this base tire manufacturing method.

### BACKGROUND ART

There has conventionally been a general method of tire manufacture in which an uncured tire, consisting of an uncured case (uncured base tire) and an uncured tread, is cured ("vulcanized") in the same curing mold into a product tire. Proposed for such a tire manufacturing method has been a method to achieve a uniform degree of cure in the tire by giving a larger amount of heat to the thicker regions of the tire in cross-sectional thickness and a smaller amount of heat to the thinner regions thereof.

However, a tire has regions, such as the tread region and the side regions, that vary significantly in cross-sectional thickness. Therefore, even when a certain region of the tire is cured at an optimum degree of cure, there remains concern for undercure or overcure in the other regions. Thus, it is necessary to repeatedly adjust the arrangement of the sources of heat supplied to the different regions of the tire, or the distribution of the amounts of heat, in order to achieve a uniform degree of cure in all the regions of the tire.

Also, in a recently proposed method of tire manufacture, a tread, which is the part of a tire bearing on the road, and a base tire, which serves as the base for a tire, are manufactured separately, the tread is placed over the circumference of the base tire with an uncured cushion rubber interposed therebetween, and the tread and the base tire are molded integrally together with the cushion rubber acting as an adhesion layer as it is cured. Nevertheless, the fact of the matter is that no measures to achieve a uniform degree of cure in the base tire have been devised yet. Attention is drawn to the disclosures of US4,568,259, JP2002-172624, EP2468469, JP2011-020508, JP10-193472, US2,966,936, WO 2008/054387 and EP 0 729 825 A2. EP2468469 forms part of the state of the art by virtue of Article 54(3) EPC.

### PRIOR ART DOCUMENT

### PATENT DOCUMENT

Patent Document 1: Japanese Unexamined Patent Application Publication No. 2006-035615
Patent Document 2: Japanese Unexamined Patent Application Publication No. H08-17455
Patent Document 3: Japanese Unexamined Patent Application Publication No. 2005-238589
Patent Document 4: Japanese Unexamined Patent Application Publication No. H10-193472

### SUMMARY OF THE INVENTION

### PROBLEMS TO BE SOLVED BY THE INVENTION

An object of the present invention is to provide a method for manufacturing a base tire with a uniform degree of cure by preventing undercure or overcure in curing an uncured base tire and using such a cured base tire in a method for manufacturing a tire according to claims 1 and 2.

### MEANS FOR SOLVING THE PROBLEM

The inventor has earnestly addressed the problem of varied degrees of cure (vulcanization) in different regions of a tire due to the varying tire thicknesses, which is a problem inherent in the conventional method of tire manufacture. As a result, the inventor has conceived of a method capable of obtaining a base tire with a uniform degree of cure, in which the tread of a tire, which has greatly varying thicknesses depending on the regions thereof, and the base tire, which serves as the base for the tire, are manufactured separately, the tread is placed on the outer periphery of the base tire with an uncured cushion rubber interposed therebetween, and the tread and the base tire are molded integrally together (en bloc) by curing the cushion rubber as an adhesion layer.

In an aspect of the invention to solve the aforementioned problem, a method for manufacturing a tire is provided as claimed in claim 1.

According to this aspect, a cure-molding of a base tire whose tire thickness is thicker in the tread region than in the side regions is performed using an amount of heat given to the tread region by the second heating means smaller than the amount of heat given to the side regions by the first heating means. However, since the rubber is cured as a result of thermal conduction of curing heat through a thermally-conducting member provided in the tread region, overcure in the tread region can be prevented and thus a cured base tire with a uniform degree of cure can be obtained.

In another aspect of the invention, the temperature of heating by the second heating means is set lower than the temperature of heating by the first heating means.

According to this aspect, a cure-molding is performed using a temperature applied to the tread region by the second heating means lower than the temperature applied to the side regions by the first heating means. However, since the rubber is cured as a result of thermal conduction of curing heat through a thermally-conducting member provided in the tread region, overcure in the tread region can be prevented and thus a cured base tire with a uniform degree of cure can be obtained.

In still another aspect of the invention, the amounts of heat given to the base tire are increasingly smaller for the bead regions, the side regions, and the tread region in this order.

According to this aspect, a cure-molding can be performed to achieve a uniform degree of cure within the base tire by employing the amounts of heat given to the base tire which are increasingly smaller for the bead regions, the side regions, and the tread region in this order.

In still another aspect of the invention, the temperatures applied to the base tire are increasingly lower for the bead regions, the side regions, and the tread region in this order.

According to this aspect, a cure-molding can be performed to achieve a uniform degree of cure within the base tire by employing the temperatures applied to the base tire which are increasingly lower for the bead regions, the side regions, and the tread region in this order.

In still another aspect of the invention, the thickness of the tread region including a base tread is greater than the thickness of the side region when the base tread to which a tread rubber is attached is placed on the radially outermost position in the tread region. Herein, the rubber placed on the radially outermost position of the tire in the tread region where a tread rubber is to be attached is referred to as the base tread.

According to this aspect, elimination of difference in level, which results from the presence in the tread region of the belt layer consisting of a stack of belts of different widths, can make it easier to attach the tread in the tread region. It is to be noted that the adhesion shape, when a finished tire is produced by cure-bonding a cured base tire and a cured tread together, can affect the tire performance. Therefore, making it easier to bond the cured base tire and the cured tread together may improve the tire performance. Also, where retreading is assumed, this aspect will improve the effect of preventing the belt layer from being exposed in the process of retreading. Furthermore, provision of the base tread allows easy adjustment of the thickness of the tread region and the side regions, thereby realizing a uniform curing of the base tire with ease. Also, mini side rubbers may be disposed on each axial side of the base tread.

In still another aspect of the invention, the adhesion surface of the base tread to which the tread rubber is attached is formed in a flat surface or a curved surface.

According to this aspect, adhesion to the tread rubber can be improved because the adhesion surface of the base tread to which the tread rubber is attached is formed in a flat surface or a curved surface.

In still another aspect of the invention, the adhesion surface of the base tread to which the tread rubber is attached is provided with a positioning means.

According to this aspect, the tread rubber can be attached to the base tire with precision because the positioning means on the base tire prevents the tread rubber from being dislocated when it is attached to the base tire.

In still another aspect of the invention, the side rubber forming the side region is made of the same material as the base tread.

According to this aspect, the side rubber forming the side region is made of the same material as that of the base tread, so that when the side rubber and the base tread are manufactured, the man-hours for changing the materials can be reduced.

In still another aspect of the invention, the side rubber forming the side region is made of a material different from that of the base tread.

According to this aspect, the side rubber forming the side region and the base tread can be made of different rubber materials specific for the performance of the respective regions of the base tire. For example, a rubber excelling in cut resistance can be used for the side rubber, and a rubber with high curing adhesiveness can be used for the base tread. Further, in consideration of desired properties of the base tire to be manufactured, rubber of high rigidity to enhance vehicle steerability or low rigidity to improve ride comfort, in addition to the above-mentioned performances, can be employed as the side rubber and the base tread.

And in still another aspect of the invention, a low thermal conducting member is provided between the second heating means and the tread region.

According to this aspect, the heat from the second heating means is conveyed to the base tire via the low thermal conducting member, and therefore the amount of heat for curing in the tread region is smaller than the amount of heat for curing in the side regions . However, since the rubber is cured by thermal conduction of curing heat via the thermally-conducting member provided in the tread region, it is possible to obtain a cured base tire with a uniform degree of cure by preventing overcure in the tread region.

### BRIEF DESCRIPTION OF THE DRAWINGS

FIG. 1 is a cross-sectional view of a curing machine in accordance with an embodiment of the present invention.
FIG. 2 is a cross-sectional view of a curing machine in accordance with another embodiment of the present invention.
FIG. 3 is a cross-sectional view of a curing machine in accordance with still another embodiment of the present invention.
FIG. 4 is a cross-sectional view of a curing machine in accordance with still another embodiment of the present invention.
FIG. 5 is a cross-sectional view of a mold section of a curing machine in accordance with another embodiment of the present invention.
FIG. 6 is a cross-sectional view of a mold section of a curing machine in accordance with still another embodiment of the present invention.
FIG. 7 is a cross-sectional view of a curing machine in accordance with still another embodiment of the present invention.
FIG. 8 is a cross-sectional view of a schematic structure of a base tire.
FIG. 9 is an exploded structure diagram of a tire.

### BEST MODE FOR CARRYING OUT THE INVENTION

Hereinafter, the invention will be described based on preferred embodiments which do not intend to limit the scope of the claims of the present invention but exemplify the invention. All of the features and the combinations thereof described in the embodiments are not necessarily essential to the invention, and they include constructions and arrangements to be employed selectively.

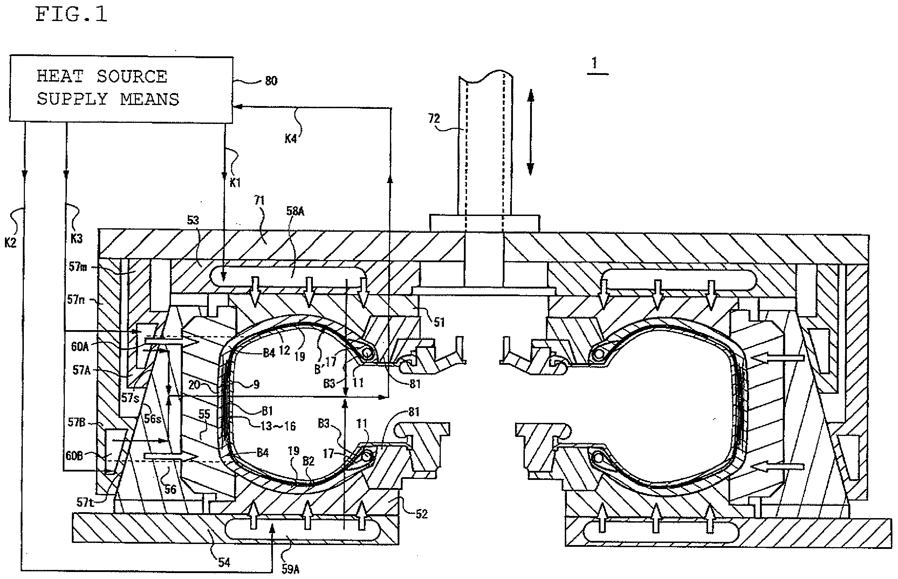

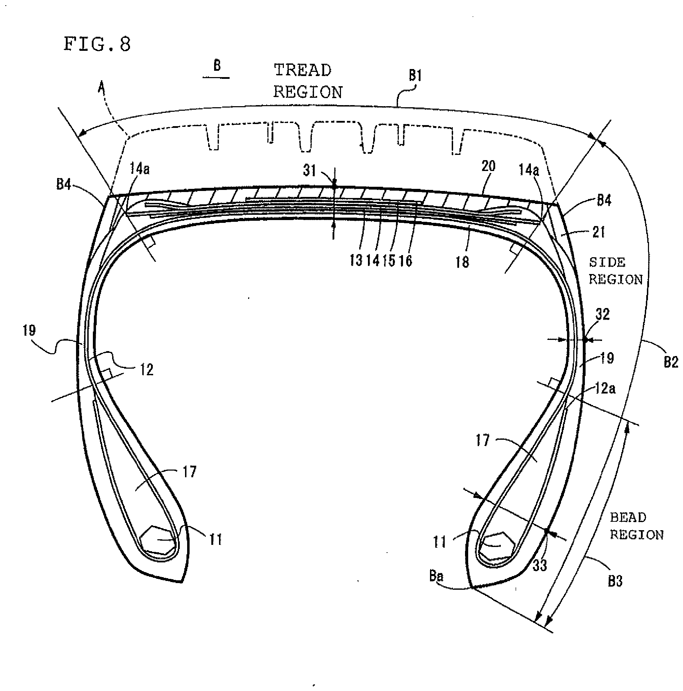

FIG. 1 illustrates an embodiment showing a curing machine 1 of a base tire. FIG. 8 shows a schematic structural illustration of a base tire which has been cured ("vulcanized") by the curing machine 1. Note that in the following description, the base tire before curing is referred to as the green base tire B', and the base tire after curing is referred to as the base tire B.

Firstly, a base tire B having been cured by the curing machine 1 will be explained with reference to FIG. 8. The base tire B includes bead cores 11, which are each a bundle of steel cords called bead cords, a carcass 12, which is of a structure of reinforcement cords, consisting of steel cords, radially oriented, and a belt layer consisting of a plurality of belts 13 to 16, which are bands formed of reinforcement cords, consisting of steel cords, arranged obliquely relative to the tire circumferential direction. The belts 13 to 16 are formed with varying widths from each other, for instance. Further, the base tire B includes bead fillers 17, which reinforce the bead cores 11, an inner liner 18, which covers the inner periphery of the carcass 12, side rubbers 19, which cover the parts of the carcass 12 corresponding to the tire sides, a base tread 20, which is the portion of a tire so disposed as to join with the right and left side rubbers 19 and cover the belt layer where a cured tread is attached in a subsequent process, and mini side rubbers 21, which are disposed on each axial side of the base tread 20 on the outer surface of the tire.

It should be noted that although FIG. 8 represents an example of a tire for truck or bus use, the tires according to the present invention are not limited to any specific applications such as passenger vehicle tires.

The green base tire B' before curing is formed as follows. First an uncured sheet of inner liner rubber, which will become the inner liner 18, is wrapped circumferentially around a cylindrical forming drum, and an uncured sheet of carcass member, which will become the carcass 12, is wrapped around the outer periphery of the inner liner rubber. Then a bead core 11 and a bead filler 17 are fitted onto each side of the outer periphery of the carcass member from each end side of the forming drum, and each of the end portions 12a of the carcass member is turned back and rolled up in such a manner as to enclose each of the bead fillers 17, thereby forming bead regions B3. Then a band-shaped rubber, which become the side rubber 19, is wrapped, in a layer on the carcass member, around each of the regions, which will be the side regions B2 of the base tire B, along the right and left bead regions B3.

Next, a swelling-out means built into the forming drum is operated, so that the middle part of the width of the stacked members swells out into a toroidal shape. Now uncured belt members formed in band shapes are wrapped around the periphery of the most swelling middle portion of the carcass member in a plurality of stacked layers, thus forming a belt layer.

Next, an uncured rubber in a band shape wider than the width of the belt layer, which will be the base tread 20, is wrapped around the outer periphery of the belt layer in such a manner that it overlaps with the edges of the rubber equal to the side rubbers 19, in a stacked layer to form the tread region B1. And rubbers, which will be the mini side rubbers 21, are wrapped around in a stacked layer where the rubber equal to the base tread 20 overlaps with the rubbers equal to the side rubbers 19.

Rubber materials of different compositions from each other are used as the rubbers corresponding to the mini side rubbers 21, the side rubbers 19, and the base tread 20.

For example, the side rubber 19 forming the side regions and the base tread 20 can be made of different rubber materials specific for the performance of the respective regions of the base tire.

For example, a rubber excelling in cut resistance can be used for the side rubbers 19, and a rubber with high curing adhesiveness can be used for the base tread 20. Further, in consideration of desired properties of the base tire to be manufactured, rubbers of high rigidity performance to enhance vehicle steerability or low rigidity performance to improve ride comfort, in addition to the above-mentioned performances, can be employed as appropriate as the side rubbers 19 and the base tread 20.

Also, the base tread 20 and the side rubbers 19 may be made of a rubber material of the same composition. If the base tread 20 and the side rubbers 19 are made of a rubber material of the same composition, the man-hours for changing the materials can be reduced in the manufacture of the base tread 20 and the side rubbers 19.

Also, the mini side rubbers 21 and the base tread 20 may be made of a rubber material of the same composition. Similarly, the mini side rubbers 21 and the side rubbers 19 may be made of a rubber material of the same composition. Moreover, the mini side rubbers 21, the side rubbers 19, and the base tread 20 may be made of a rubber material of the same composition. Such a selection may be made as appropriate in consideration of the specifications for the base tire.

Also, a base tire B without the mini side rubbers 21 is permissible. However, provision of the mini side rubbers 21 can improve the cut resistance of the side regions B2 in areas where they are the closest to the road surface.

Note also that the present invention is applicable not only to the above-described method of base tire manufacture using a forming drum but also to methods of base tire manufacture in which member materials are placed on a mold having the shape of the tire interior and then a cure-molding is performed with the member materials covered by an outer mold.

As shown in FIG. 8, the tread region B1 refers to the region between the end portions 14a, 14a of the widest belt 14. Also, the side region B2 refers to the region between the end portion 14a of the belt 14 and the edge Ba along the inner diameter (circumference) of the tire. Also, the bead region B3 refers to the region from the upper end of the bead filler 17 to the edge Ba along the inner diameter of the tire in the side region B2. That is, the bead region B3 is included in the side region B2.

It is to be noted that for the base tire B not provided with the bead filler 17, the bead region B3 refers to the region between the upper end of the bead core 11 and the edge Ba along the inner diameter of the tire. Also, when it is not provided with the bead core 11, the bead region B3 refers to the region between the upper end of the bead corresponding to the bead core 11 and the edge Ba along the inner diameter of the tire.

Also, the tire cross-sectional thickness refers to the distance between the intersections with the radially innermost surface and the radially outermost surface of the tire of a virtual line drawn perpendicular to the radially innermost surface in the tire width (axial) cross section at the atmospheric pressure with the tire fitted on the rim applicable to each tire size.

Also, the tire cross-sectional thickness in the tread region B1 refers to that at the axial center position 31 in the tread region B1, the tire cross-sectional thickness in the side region B2 refers to that at the thinnest position 32 in the side region B2, and the tire cross-sectional thickness in the bead region B3 refers to that at the thickest position in the bead region B3 on the radially outer side of the bead core 11. Note that when there is no bead core 11 provided, the tire cross-sectional thickness in the bead region B3 refers to that at the thickest position in the bead region B3.

Also, in the present embodiment, the measuring points to achieve optimum curing in each of the tread region B1, the side regions B2, and the bead regions B3 of a green base tire B' are set at their respective positions on the radially outermost surfaces (tire exterior surfaces) of the tire corresponding to the above-mentioned tire cross-sectional thicknesses.

That is, when the curing of a base tire is performed, the amount of heat and temperature given to the tread region B1 are measured at the axial center position 31, those given to the side region B2 at the thinnest position 32 in the side region B2, and those given to the bead region B3 at the thickest position 33 in the bead region on the radially outer side of the bead core. Also, the amounts of heat given to the tread region B1, the side regions B2, and the bead regions B3 are calculated as a product of the temperature and the amount of time for heating at each of the measuring points. The green base tire B' of the above-described structure is such that the tire thickness in the bead region B3 is the thickest, the thickness the tread region B1, which includes the base tread region, is thicker than the bead region B3, and that in the side region B2 is the thinnest.

The above-described green base tire B' is of the same structure as that of a tire manufactured by the general method of tire manufacture except that it is not provided with a tread rubber A in the tread region B1. Note that the general method of tire manufacture is such that a green base tire B' with the tread rubber A placed on the base tread 20 thereof is loaded into a curing machine 1, where the entirety of a tire including tread rubber A is cure-molded integrally together.

The green base tire B', in a state without the tread rubber A in place, is cured in the curing machine 1 which will be discussed later. Then after an adhesion layer is formed on top of the belts 13 to 16 and the base tread 20, a cure-molded tread rubber A, which will become the tire tread, is placed on the outer circumference of the adhesion layer. Then the green base tire B' and the tread rubber A are molded into one body as the adhesion layer is cured. A detailed description will be given of the method for manufacturing this tire later.

Hereinbelow, a curing machine 1 that can suitably cure the green base tire B' will be explained.

In FIG. 1, the reference numerals 51 and 52 denote an upper mold and a lower mold, which have each a ringed disk shape. The upper mold 51 is movable up and down relative to the lower mold 52. The upper mold 51 and the lower mold 52, in contact with the side regions B2 which are the sides of a green base tire B' to be cured, not only cure the side regions B2, but also emboss the tire size, serial number, and the like on the side surfaces of the green base tire B'. The upper and lower molds 51 and 52 are provided with bead molds 81 for molding the bead regions B3 on their respective molding surfaces facing each other. The bead molds 81, which are formed annularly along the inner circumference of the upper and lower molds 51 and 52, mold the bead regions B3 into a predetermined shape relative to the side regions Ba and Bb which are molded by the upper and lower molds 51 and 52.

The upper mold 51 and the lower mold 52 are respectively mounted to an upper platen 53 and a lower platen 54, which serve as a first heating means. Formed inside the upper platen 53 and the lower platen 54 serving as the first heating means are steam pathways 58A and 59A. As a heating medium, such as steam, from a heat source supply means 80 to be discussed later is circulated through the steam pathways 58A and 59A, the side regions B2 including the bead regions B3 of the green base tire B' are heated and the inner surface temperatures of the upper mold 51 and the lower mold 52 including the bead molds 81 are raised to predetermined temperatures required for curing.

The reference numeral 55 denotes tread molds, which are disposed along the outer periphery of the molding surfaces of the upper mold 51 and the lower mold 52. The tread molds 55, which are ring-shaped as a whole, consist of a plurality, e.g., 12, of divisions along the circumference of the green base tire B'. They are disposed concentrically with the green base tire B' between the upper mold 51 and the lower mold 52.

The inner peripheral surface of the tread molds 55, when disposed in a ring, forms a circularly curved surface, which comes in contact with the outer peripheral surface of the green base tire B' to be cured, namely, the tread region B1 thereof. It is the molding surface that molds the base tread 20 in the tread region B1. Hence, the outer peripheral surface of the base tread 20 in the tread region B1 to be molded by the tread molds 55 is curved in a predetermined shape in the tire width direction when viewed in an axial cross section. Thus, the curved surface shape is produced as the cross-sectional shape of the base tread 20 is formed along the tire circumferential direction. In other words, the outer peripheral surface of the base tread 20 which serves as the adhesion surface for the tread rubber A is molded into a curved surface shape. Also, in the case where the inner periphery of the tread molds 55 is of a cylindrical shape with flat surface, the outer peripheral surface of the base tread 20 which serves as the adhesion surface for the tread rubber A will be of a flat surface shape in the axial cross section.

Also, the inner peripheral surface of the tread molds 55 has grooves and ridges intermittently or continuously over the entire tire circumference. The grooves and ridges on the tread molds 55 are there to produce grooves and ridges on the outer peripheral surface of the base tread 20. The grooves and ridges formed on the outer peripheral surface of the base tread 20 serve as positioning means when the tread rubber A is attached to the base tire B. It is to be noted that the inner peripheral side of the tread rubber A comes with ridges and grooves that fit in with the corresponding grooves and ridges on the outer peripheral surface of the base tread 20. With positioning means formed on the base tread 20 in this manner, it is possible to prevent the tread rubber A from being axially dislocated relative to the base tread 20 when the tread rubber A is attached thereto. Note that the number of grooves and ridges to be formed on the base tread 20 may be determined as appropriate.

Also, the inner peripheral surface of the tread molds 55 may have the grooves and ridges formed such that the grooves and ridges on the base tread 20 can be formed in the axial direction instead of the circumferential direction. Also, the arrangement may be such that the positioning means is formed on the outer peripheral surface of the base tread 20 in a combination of axial and circumferential grooves and ridges. Note also that a marking as a positioning means may be put on the outer peripheral surface of the base tire in order to improve the accuracy of visual positioning.

As described above, the green base tire B' is cure-molded with the tread region B1 and the side regions B2 thereof enclosed within the upper mold 51, the lower mold 52, and the tread molds 55.

Mounted to the outer periphery of each of the tread molds 55 is a tread segment (hereinafter referred to as "segment") 56. The segments 56 are movable along the radially formed grooves in the top surface of the lower platen 54 serving as the first heating means. With each of the segments 56 moving along the groove, the molding space formed by a plurality of tread molds 55 is expanded or contracted. An inclined surface 56s is formed on the outer periphery of the segment 56, and when the segments 56 are arranged in a ring, the inclined surfaces 56s form tapered curved surfaces continuously.

A first outer ring 57A and a second outer ring 57B, serving as the second heating means, have each an inversely curved surface facing the tapered curved surface of the group of segments 56 and are each divided into a plurality, two in this example, of parts. They are disposed outside the segments 56, axially spaced apart from each other in the tread region B1.

That is, the inversely inclined surfaces 57s and 57t facing the inclined surface 56s on the outer periphery of the segment 56 are formed on the inner periphery of the first outer ring 57A and the second outer ring 57B, respectively. They form an inversely tapered curved surface facing the tapered curved surface formed by the segments 56.

The smaller-diameter first outer ring 57A and the larger-diameter second outer ring 57B, serving as the second heating means, are fixed, on the top side thereof, to a ring locking platen 71 of a flat disk shape via the arms 57m and 57n. And as a moving means 72 attached to the center of the ring locking platen 71 moves up or down, the first outer ring 57A and the second outer ring 57B move up or down together with the ring locking platen 71. This expands or contracts the molding space formed by the tread molds 55 and also prevents the tread molds 55 from spreading wider in diameter at the time of curing.

Provided inside the first outer ring 57A and the second outer ring 57B as the second heating means are steam pathways 60A and 60B which are each formed in a ring along the inner periphery thereof. The first outer ring 57A, provided with the steam pathway 60A formed in a ring shape, is disposed in a radially outer position corresponding to one of the hump portions B4 of the tread molds 55, thereby heating this section of the tire. The second outer ring 57B, provided with the steam pathway 60B formed in a ring shape, is disposed in a radially outer position corresponding to the other of the hump portions B4 of the tread molds 55, thereby heating this section of the tire. Note that the portion in the side region B2 having the greatest thickness, with the exception of the bead region B3, where the tread region B1 and the side region B2 are joined with each other will be hereafter referred to as the hump portion.

In the present embodiment, the upper platen 53 and the lower platen 54, serving as the first heating means, constitute the upper and lower heating sections for heating both the upper and lower side regions B2 of the green base tire B'. The first outer ring 57A and the second outer ring 57B, serving as the second heating means, constitute the hump heating sections for heating both of the hump portions B4 on the tread region B1 side of the tread molds 55. These heating sections (upper platen 53, lower platen 54, first outer ring 57A, second outer ring 57B) constitute the first and second heating means.

The steam pathways 58A, 59A, 60A, 60B in the upper and lower platens 53 and 54, the first outer ring 57A, and the second outer ring 57B are connected to the heat source supply means 80 by their respective heat-insulated high-pressure tubes (not shown) or the like. With steam circulated through these steam pathways 58A, 59A, 60A, 60B, the heat of the steam is conveyed to the tread region B1 of the green base tire B' via the segments 56 and the tread molds 55. And the respective regions of the tire are heated to temperatures necessary for curing, and the temperatures are maintained for a predetermined period of time.

As indicated by the arrows K1, K2, and K3, the steam discharged from the heat source supply means 80 is passed through the upper platen 53, the lower platen 54, the first outer ring 57A, and the second outer ring 57B, respectively, and then sent back to the heat source supply means 80 as indicated by the arrow K4.

By implementing a structure as described above, the amount of heat given to the tread region B1 by the first outer ring 57A and the second outer ring 57B will be smaller than the amount of heat given to the side regions B2 by the upper and lower platens 53 and 54, even if the steam having the same amount of heat from the heat source supply means 80 is supplied to the upper and lower platens 53, 54 as the first heating means and the first outer ring 57A and the second outer ring 57B as the second heating means. Thus it is possible to achieve a uniform degree of cure by preventing both the undercure in the side regions B2 and overcure in the tread region B1.

That is, the amount of heat supplied to the first outer ring 57A and the second outer ring 57B is conveyed to the tread region B1 of the base tire via the segments 56 and the tread molds 55. And the amount of heat supplied to the upper and lower platens 53, 54 is conveyed to the side regions B2 of the base tire via the upper mold 51 and the lower mold 52. Therefore, it is possible to make the amount of heat by which the tread region B1 is heated by the first outer ring 57A and the second outer ring 57B smaller than the amount of heat by which the side regions B2 are heated by the upper and lower platens 53, 54, even if the steam having the same amount of heat from the heat source supply means 80 is supplied to the upper and lower platens 53 and 54 and the first outer ring 57A and the second outer ring 57B. Thus, the amount of heat with which the tread region B1 is heated by the first outer ring 57A and the second outer ring 57B is made smaller than the amount of heat with which the side regions B2 are heated by the upper and lower platens 53, 54. And since the heat is conducted throughout the tread region B1, which has a greater wall thickness than the side regions B2, by the belt layer consisting of steel cords with high thermal conductivity, the tread region B1 can be cured with better efficiency despite the smaller amount of heat. At the bead cores 11 having steel cords with high thermal conductivity, on the other hand, the heat from the upper and lower platens 53, 54 is absorbed by the bead fillers 17. Therefore, there is no acceleration of curing in the bead regions B3 due to the bead cores 11 having high thermal conductivity.

Thus, it is possible to prevent both the undercure in the side regions B2 and overcure in the tread region B1 of the base tire B after curing. In other words, by making the amount of heat with which to heat the tread region B1 smaller than the amount of heat with which to heat the side regions B2, it is possible to achieve a uniform degree of cure by preventing the undercure in the side regions B2 and overcure in the tread region B1.

Using a curing machine 1 of a structure as described above, a green base tire B' is molded into a base tire B as follows.

A green base tire B' molded in a preceding process is set in a predetermined position such that the side region B2 comes in contact with the lower mold 52 in the curing machine 1. Then the first outer ring 57A and the second outer ring 57B, as the second heating means, are lowered together with the ring locking platen 71, thereby contracting the diameter of the plurality of tread molds 55 and having them come in contact with the tread region B1 of the green base tire B'. At the same time, the upper mold 51 is lowered to have the upper and lower molds 51 and 52 come in contact with the side regions B2, B2, thereby forming a molding space in which the green base tire B' is cure-molded. At this time, the steam pathways 60A and 60B in the first outer ring 57A and the second outer ring 57B are located in positions corresponding to the hump portions B4 of the green base tire B', respectively.

In this state, a high-temperature steam whose predefined temperature is 150 to 200°C is circulated through steam pipes from the heat source supply means 80, e.g., a steam tank, supplying steam as the heating medium, to the steam pathways 58A, 59A, 60A, 60B in the upper and lower platens 53 and 54, as the first heating means, and the first and second outer rings 57A and 57B, as the second heating means. As a result, the green base tire B' is heated from outside via the upper and lower molds 51 and 52 and the segments 56 and the tread molds 55. At the same time, a bladder 9 disposed on the inner side of the green base tire B' is inflated by supplying the heating medium. This results in giving pressure from inside to the tread region B1, the side regions B2, and the bead regions B3 while they are heated with a uniform amount of heat. Thus, the green base tire B' is molded and cured into a new base tire B as it is pressed by the upper and lower molds 51 and 52 and the tread molds 55.

In other words, a green base tire B' with the tread region B1 having been molded with a thin wall is first enclosed within the upper and lower molds 51 and 52 and the tread molds 55. Then steam is supplied from the heat source supply means 80 to the steam pathways 58A and 59A in the upper and lower platens 53 and 54 for heating the upper and lower molds 51 and 52 and to the steam pathways 60A and 60B in the first and second outer rings 57A and 57B for heating the tread molds 55 in positions facing the pair of the right and left hump portions B4 of the green base tire B'. Thus the upper and lower molds 51 and 52 and the tread molds 55 are heated. As a result, the amount of heat given to the tread region B1 of the green base tire B', which is heated by the first and second outer rings 57A and 57B via the tread molds 55, becomes smaller than the amount of heat given to the side regions B2 thereof, which is heated by the upper and lower platens 53 and 54 via the upper and lower molds 51 and 52. And this will achieve a generally uniform degree of cure in the cure-molded base tire B.

That is, the second heating means for heating the tread region B1 are divided into the first and second outer rings 57A and 57B, which correspond to the pair of the hump portions B4 of the green base tire B'. This can achieve a uniform degree of cure in the base tire B by making the amount of heat for heating the tread region B1 of the green base tire B' smaller than the amount of heat for heating the side regions B2 side thereof.

As explained above, the first and second outer rings 57A and 57B, as the second heating means for heating the tread region B1, are provided as divisions facing the hump portions B4, B4, which correspond to the shoulder portions of a tire . Accordingly, an existing curing machine 1 for molding a regular tire can be put to use for molding a base tire B by simply exchanging the outer rings, which can be accomplished by minimal equipment investment. Also, it should be understood by those skilled in the art that division of the second heating means is not limited to two divisions, namely, the first and second outer rings 57A and 57B as in the above example, but can be more than two divisions so as to control the amount of heat for heating the tread region B1.

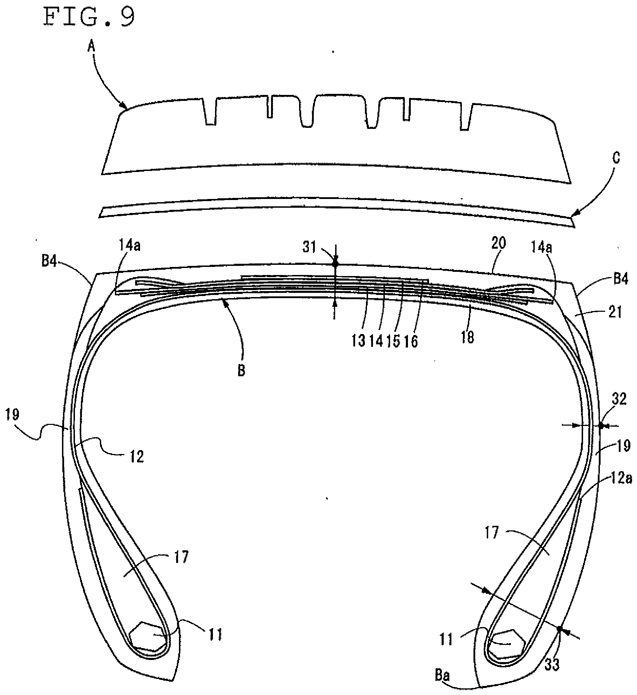

FIG. 9 is an exploded structure diagram of a tire that can be manufactured by a method of the present invention.

A tire is manufactured by attaching a cured tread rubber A in the tread region of a base tire B having been cured by the above-described method with a cushion rubber C interposed therebetween. Hereinbelow, a method for manufacturing a tire will be explained.

The tread rubber A to be attached to the base tire B is one having been cure-molded into a band shape with a predetermined length or a ring shape. When the tread rubber A is band-shaped, a tread pattern is molded on one of the surfaces, and an adhesion surface to be attached to the base tire B on the other of the surfaces. Also, when the tread is ring-shaped, a tread pattern is molded on the outer periphery, and an adhesion surface to be attached to the base tire B on the inner periphery.

The surface of the base tire B in the tread region B1 is formed by a process called buffing into a shape corresponding to the shape of the adhesion surface of the tread rubber A to be attached there. And an adhesion layer is formed between the tread rubber A and the base tire B with an uncured cushion rubber C wrapped uniformly around the buffed surface in the tread region. The tread rubber A is placed on top of the adhesion layer. The exterior surfaces of the base tire B with the tread rubber A placed thereon are covered with a not-shown cladding called an envelope. Further, a ring member for making the cladding adhere to the bead region B3 of the base tire B is fitted on the bead region in such a manner as to clasp the envelope. Thus the surfaces of the tread rubber A and the base tire B are sealed inside the envelope.

Next, the tread rubber A and the base tire B covered with the envelope are loaded into a curing facility called the curing can. The curing can is a facility that allows flexible adjustment of pressure and temperature within the can. In the can, the base tire B and the tread rubber are bonded together by curing the adhesion layer placed between the tread rubber A and the base tire B covered by the envelope while the pressure and temperature within the can are adjusted. Then, after the lapse of a predetermined time, the tread rubber A and the base tire B covered with the envelope are removed from the curing can, and a tire thus produced is taken out of the envelope.

The tire manufactured as described above features a uniform degree of cure as a whole. That is, the base tire B and the tread rubber A are cure-molded separately, so that there will be smaller differences in cross-sectional thickness between the member materials of the base tire B and also in cross-sectional thickness of the tread rubber A than when they are cured en bloc as practiced conventionally. Thus, a uniform curing can be accomplished for both the tread rubber A and base tire B, so that optimum control of the degree of cure can be achieved for the tread rubber A and the base tire B.

In the foregoing description of the curing machine 1, the outer rings 57A and 57B as the second heating means consist of a plurality of (two) divisions, and the steam pathways 60A and 60B are formed independently inside the outer rings 57A and 57B, respectively. However, in another embodiment of the curing machine 1, the steam pathways 60A and 60B may be formed separately within a single outer ring 57, spaced apart from each other in the axial direction in the tread region.

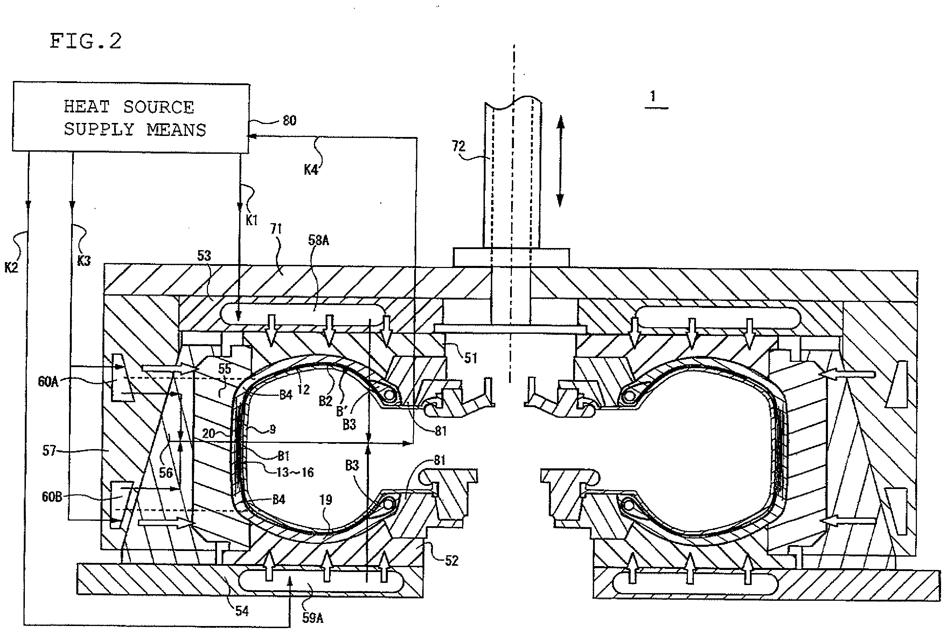

For example, as shown in FIG. 2, the steam pathway 60A may be formed in a position facing the hump portion B4 corresponding to the tire shoulder region on the upper mold 51 side, and the steam pathway 60B in a position facing the hump portion B4 on the lower mold 52 side, within the outer ring 57 as the second heating means.

In other words, the upper platen 53 and the lower platen 54 are structured as the upper and lower heating sections serving as the first heating means for heating the upper and lower sides of the green base tire B'. The outer ring 57 is structured as the hump heating section serving as the second heating means for heating the hump portions B4 on both sides of the tread mold 55. Thus these heating sections (upper platen 53, lower platen 54, outer ring 57) constitute the first and second heating means. In a structure like this, too, the tread region B1 can be heated uniformly on account of the heat conduction by the belts 13 to 16 in the tread region B1 of the heating temperature of the second heating means facing the hump portions in the tread region B1. As a result, the whole of the green base tire B' can be cured uniformly.

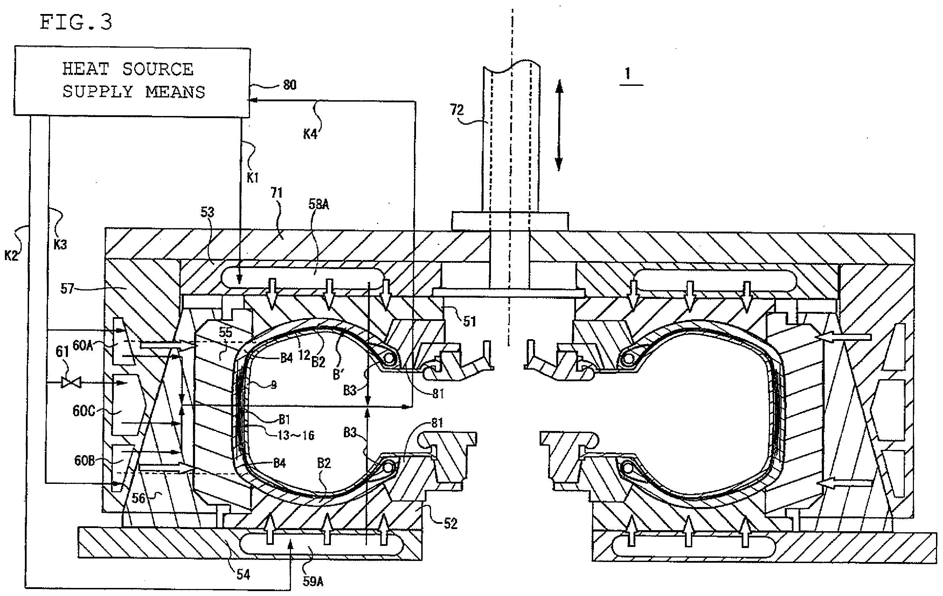

FIG. 3 shows a curing machine 1 according to another embodiment of the invention.

As another embodiment of the curing machine 1, three independent heating sections may be provided by adding a steam pathway 60C as the middle heating section between the steam pathways 60A and 60B. This is a substitute for the embodiment of the curing machine 1 in which two independent steam pathways 60A and 60B are formed within a single outer ring 57 as the second heating means, spaced apart from each other in the axial direction in the tread region.

In this structure, the arrangement for supply of steam is such that the steam pathways 58A and 59A in the upper and lower platens 53 and 54 as the first heating means in the side regions B2 and the steam pathways 60A, 60B, and 60C in the outer ring 57 as the second heating means are individually connected to the heat source supply means 80 supplying steam as the heating medium. And a valve 61, as an operation unit enabling the control of the amount of heating, is provided between the steam pathway 60C as the middle heating section and the heat source supply means 80, so that the amount of heating in the middle portion of the tread region B1 can be controlled.

In other words, the upper platen 53 and the lower platen 54 are structured as the upper and lower heating sections serving as the first heating means for heating the upper and lower side regions B2 of the green base tire B'. The outer ring 57 is structured as the hump heating section serving as the second heating means for heating the hump portions B4 on both sides of the tread mold 55 and also as the middle heating section. Thus these heating sections (upper platen 53, lower platen 54, outer ring 57) constitute the heating means.

In this case, with the valve 61 for controlling the amount of heating set in a fully-closed state, an optimum curing can be accomplished on a green base tire, which will become a base tire, because steam can be circulated through the steam pathways 60A and 60B that heat the hump portions B4 only. Also, with the valve 61 in a fully-open state, an optimum curing can be performed for regular tires. Also, with the amount of heating adjusted by controlling the valve 61 appropriately, an optimum curing can be performed for regular tires and base tires of varying sizes.

The arrangement may also be such that valves for steam flow control or valves for temperature control are provided for the steam pathways 60A and 60B also to enable temperature adjustments .

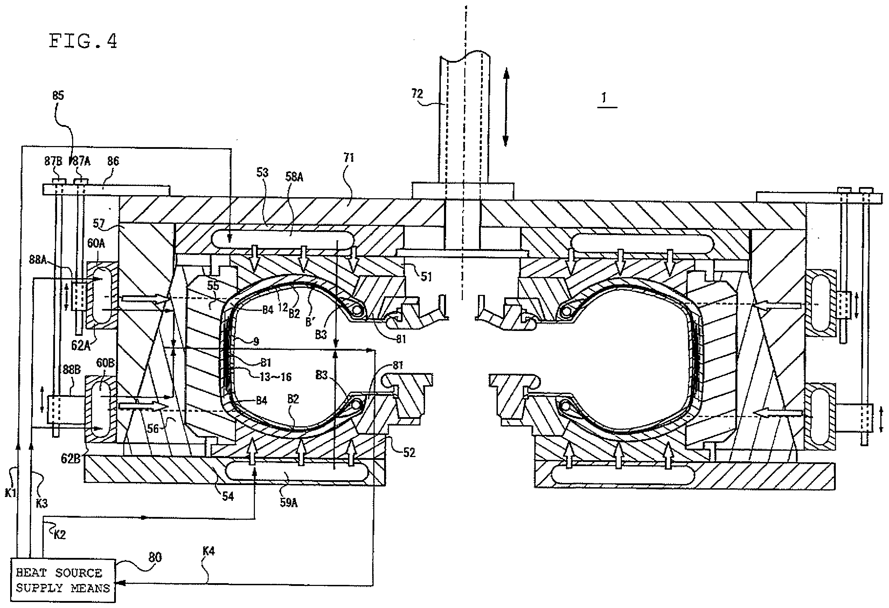

FIG. 4 shows a curing machine 1 according to still another embodiment of the invention.

As still another embodiment of the curing machine 1, the steam pathways 60A and 60B may be provided outside the outer ring 57, in substitution for the embodiment of the curing machine 1 in which steam pathways are formed within the outer ring as the second heating means.

That is, in this embodiment of the curing machine 1, the steam pathways 60A and 60B are disposed on the outer periphery of the outer ring 57 as the second heating means, and at the same time a position control means 85 is provided that controls the positions of the steam pathways 60A and 60B in such a manner that they are axially spaced apart from each other in the tread region B1.

In this embodiment, the outer ring 57, which is solidly formed, performs the roles of controlling the expansion and contraction of the tread molds 55, resisting the forces for expanding the diameter of the tread molds 55 at the time of molding, and conducting the heat from the steam pathways 60A and 60B provided on the outer periphery thereof.

More specifically, as shown in FIG. 4, the steam pathways 60A and 60B are, for instance, formed respectively inside a first heating ring 62A and a second heating ring 62B, which are provided on the outer periphery of the outer ring 57 and slide along the outer periphery in the axial direction of the tire (vertical direction of the curing machine 1) for positional adjustment. The first heating ring 62A and the second heating ring 62B are formed of a high thermal conducting material, such as copper, and have a heat-transfer surface formed thereon for close contact with the outer periphery of the outer ring 57. Provided on the outside of the first heating ring 62A and the second heating ring 62B is the position control means 85 which can adjust the positions thereof individually.

In structuring the position control means 85, stays 86, which extend outward from the top surface of the ring locking platen 71 fixing the outer ring 57, are disposed at a plurality of radially equally-spaced positions, and positioning bolts 87A and 87B are passed through the stays 86 and screwed into nuts 88A and 88B which are fixed to the outer peripheries of the first heating ring 62A and the second heating ring 62B, respectively.

According to the present embodiment, therefore, the upper platen 53 and the lower platen 54 constitute the first heating means for heating the upper and lower side regions B2 of the green base tire B'. The outer ring 57 and the first heating ring 62A and the second heating ring 62B provided on the outer periphery of the outer ring 57 constitute the second heating means for heating the hump portions B4 on both sides of the tread mold 55.

With the above-described structure implemented, turning the positioning bolts 87A and 87B will move the first heating ring 62A and the second heating ring 62B up or down over the outer periphery of the outer ring 57 relative to the positions of the hump portions B4 of the green base tire B' to be cured. Therefore, even when the base tire of a different size is to be cured, it is possible to carry out the heating of the base tire at optimum positions for the hump portions B4 thereof. Thus, the occurrence of defective curing in the tread region B1 or the like can be prevented.

Also, as still another embodiment of the curing machine 1, steam pathways may be formed inside the outer ring as the second heating means or on the outer periphery thereof such that a difference in heating can be achieved between the hump portions B4 and the middle portion in the tread region B1 and further the heating temperature for the middle portion in the tread region B1 can be set lower than the heating temperature for the hump portions B4 in the tread region B1.

More specifically, the tread molds 55 may be made of stainless steel or the like, which is a lower thermal conducting material than cast iron or the like of which the upper and lower molds 51 and 52 are made. Thus differences in heating routes when the green base tire B' is cured can be created.

That is, the side regions B2 of the green base tire B' is heated earlier than the tread region B1 thereof by the upper and lower molds 51 and 52, made of cast iron or the like featuring a better thermal conductivity, which are heated by the upper and lower platens 53 and 54. At this time, although the tread molds 55 are heated not only from outside by the segments 56 but also from the upper and lower sides by the conduction of heat of the upper and lower molds 51 and 52, the temperature rise is smaller because they are made of stainless steel whose thermal conductivity is lower than that of cast iron.

That is, curing of the green base tire B' progresses from the side regions B2. And along with the progress of curing, the hump portions B4 are gradually heated not only from the side region B2 sides but also slowly from the tread molds 55, so that overcure in the tread region B1 can be prevented.

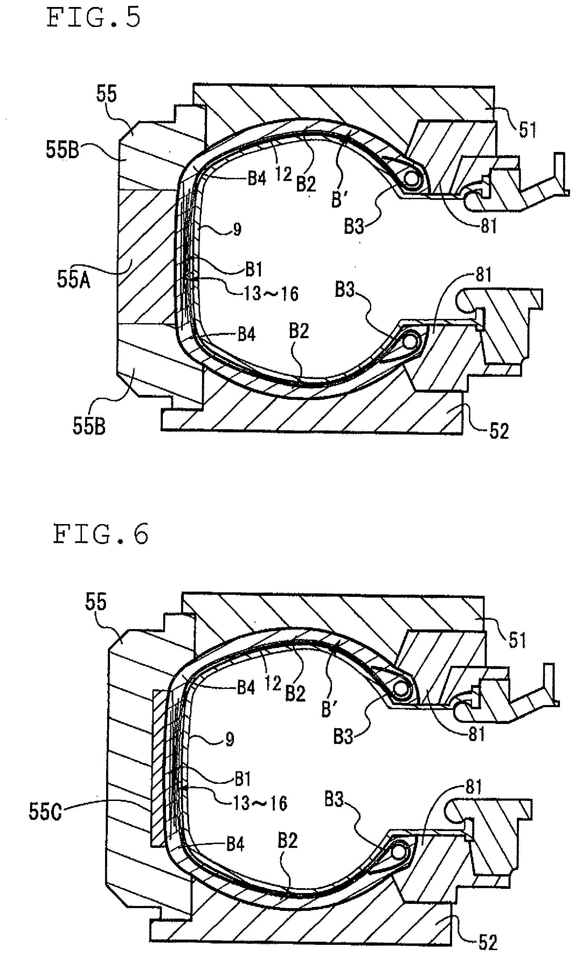

In this example, the tread molds 55 are made of stainless steel as low thermal conducting material. However, as shown in FIG. 5, the tread mold 55 may, for instance, be constituted of cast iron portions 55B and a stainless steel portion 55A, which are members providing partially differing thermal conductivity. In this manner, the heating temperature for the middle portion of the tread region B1 can be set lower than the heating temperature of the heating means corresponding to the hump portions B4 of the tread region B1.

Also, as shown in FIG. 6, a member 55C, made of stainless steel or the like featuring a lower thermal conductivity than that of the tread mold 55, may be provided on the surface of the tread mold 55 that will come in contact with the tread region B1 of the green base tire B'. The member 55C may, for example, be formed in the width of the belt 14 and disposed in such a manner as to cover the tread region B1 of the green base tire B' circumferentially. Then an optimum curing can be performed even with a small amount of heat because the heat from the hump portions B4 in contact with the tread mold 55 is thermally conducted to the entirety of the tread region B1 by the belt layer. Hence, overcure in the tread region B1 can be prevented.

As described above, the steam pathways 60A and 60B of the second heating means are provided and steam as the heating medium is supplied from a common heat source supply means 80, so that the amount of heat for heating by the second heating means facing the hump portions B4, B4 in the tread region B1 can be set smaller than the amount of heat for heating by the first heating means facing the side regions B2. Because of this arrangement, it is only necessary to change the outer ring as the heating means of the curing machine 1. Thus, a new base tire can be manufactured without defective curing while maintaining low equipment cost. Further, the tread molds 55 may be made of a low thermal conducting material whose thermal conductivity is lower than that of the upper and lower molds 51 and 52, in addition to the use of the steam pathways 60A and 60B of the second heating means. Thus, the heating temperature of the second heating means facing the hump portions in the tread region B1 can be conducted to the entirety of the tread region B1 via the belt layer, so that the tread region B1 can be cured at a temperature lower than that for the side regions B2.

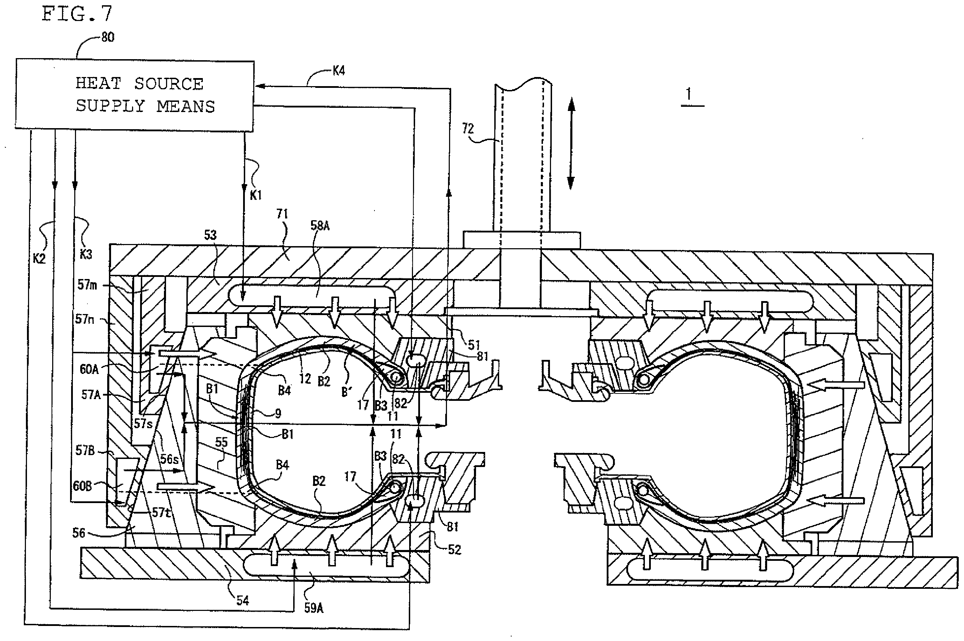

FIG. 7 shows a schematic structure of a curing machine 1 according to this embodiment.

As still another embodiment of the curing machine 1, the arrangement may be such that a third heating means for heating the bead regions B3 is provided.

As shown in FIG. 7, the curing machine 1 is structured such that steam pathways 82, 82 along the bead regions B3 are formed within the bead molds 81 for cure-molding the bead regions B3 of the green base tire B'. And heating and curing are performed by preferentially supplying an amount of heat to the bead regions B3 as the bead molds 81 are heated with steam from the heat source supply means 80 circulated through the steam pathways 82, 82.

In this embodiment, a green base tire B' which will become a base tire is cured as follows. As the steam supplied from the heat source supply means 80 is circulated through the steam pathways 58A and 59A in the upper and lower platens 53 and 54 as the first heating means, the steam pathways 60A and 60B in the first and second outer rings 57A and 57B as the second heating means, and the steam pathways 82 in the bead molds 81 as the third heating means, the bead regions B3 of the green base tire B' are first heated by the bead molds 81. Next, the side regions B2 are heated by the heat of the upper and lower molds 51 and 52 heated by the upper and lower platens 53 and 54, and then the tread region B1 is heated by the heat of the first and second outer rings 57A and 57B via the segment 56 from the positions facing the hump portions B4, B4 corresponding to the shoulder regions of the tread mold 55.

More specifically, the bead regions B3 of the green base tire B' are first heated because they are in direct contact with the bead molds 81 and the heat of the bead molds 81 is immediately conducted therethrough. The side regions B2, which are subject to heating with the heat of the upper and lower platens 53 and 54 conducted through the upper and lower molds 51 and 52, are heated after a delay of time that is taken for the heating of the upper and lower molds 51 and 52 after the heating of the bead regions B3. The tread region B1, which is subject to heating with the heat of the first and second outer rings 57A and 57B conducted through the segment 56 and the tread mold 55, is heated after a delay of time that is taken for the heating of the segment 56 and the tread mold 55 after the heating of the side regions B2.

In other words, the time span for heating the green base tire B' is increasingly longer for the tread region B1, the side regions B2, and the bead region B3 in this order. As a result, the amount of heat given is increasingly smaller for the bead region B3, the side regions B2, and the tread region B1 in this order. This order of the amounts of heat given is the reverse of the one for the cure-molding of the so-called product tire.

That is, the heating of the green base tire B' begins with the bead regions B3 by the bead molds 81, and initially the bead regions B3 only are heated until the upper and lower molds 51 and 52 and the tread molds 55 are heated. During the period until the heat of the upper and lower platens 53 and 54 is conducted to the surface of the side regions B2, the upper and lower molds 51 and 52 are heated by the adjacent bead molds 81, and the side regions B2 in contact with the upper and lower molds 51 and 52 are heated from the bead region B3 side thereof. And when the heat of the upper and lower platens 53 and 54 is conducted to the surfaces of the upper and lower molds 51 and 52 in contact with the side regions B2, the entirety of the side regions B2 is heated. During the period until the heat of the first and second outer rings 57A and 57B is conducted to the surface of the tread region B1, the tread molds 55 are heated by the heat of the adjacent upper and lower molds 51 and 52, and the tread region B1 in contact with the tread molds 55 is heated from both ends of the tread region B1. And as the heat of the first and second outer rings 57A and 57B is conducted to the surface in contact with the tread region B1, the tread region B1 is heated preferentially from both ends thereof.

Also, along with the heating of the molds 51, 52, and 55, the green base tire B' is heated and pressurized from inside as the bladder 9 disposed therein is inflated by a heating medium or the like. Thus, the green base tire B' is cure-molded into a new base tire.

By implementing the structure of the curing machine as described in this embodiment, the green base tire B' is cured in the sequence of the bead regions B3, the side regions B2, and the tread region B1. As a result, the bead regions B3 of the green base tire B', which is the thickest-walled, the side regions B2, which are thinner walled than the bead regions B3, and the tread region B1, which is the thinnest-walled, are cured with a substantially uniform degree of cure.

Also, provision of the third heating means for heating and curing the bead regions B3 makes it possible to prevent not only undercure in the bead regions B3 but also overcure in the tread region B1 even when the bead filler 17, made of an uncured rubber, is placed together with the bead core 11 in the bead regions B3 of the green base tire B'.

It should be noted that although the steam pathway 82 as the third heating means is provided within the bead mold 81 as described herein, the arrangement may be such that the third heating means is provided in the vicinity of the bead regions B3 within the upper and lower molds 51 and 52.

As described above, using the aforementioned curing machine 1, a cure-molding can be accomplished such that the amount of heat for heating the tread region B1 of the green base tire B' by the second heating means is smaller than the amount of heat for heating the side regions B2 of the green base tire B' by the first heating means. As a result, it is possible to prevent overcure in the tread region B1 and undercure in the bead regions B3 with the thickest wall. In other words, the base tire B cure-molded by the above-described equipment has a uniform degree of cure in all of the bead regions B3, the side regions B2, and the tread region B1.

Also, as a method for suitably curing the green base tire B' by the use of the above-described curing machine 1, curing may be performed as follows, using valves to be opened or closed for the circulation of heating medium provided on the respective routes for supplying the heating medium from the heat source supply means 80 to the first heating means and the second heating means.

First the curing of the tread region B1 and the side regions B2 is started by simultaneously starting the heating by the first heating means and the second heating means. Then the heating of the tread region B1 by the second heating means is stopped earlier than the heating of the side regions B2 by the first heating means, so that a time difference results between the time for heating the tread region B1 and the time for heating the side regions B2. Thus the difference between the amount of heat supplied to the tread region B1 and that supplied to the side regions B2 may be made greater. In this manner of curing, too, the cure in the tread region B1 progresses owing to the heat accumulated in the belt layer. Accordingly, it is possible to prevent not only overcure in the tread region but also undercure in the side regions B2 including the bead regions B3.

Also, as another method, the heating of the tread region B1 by the second heating means is started later than the heating of the side regions B2 by the first heating means . Then the heating by the first heating means and the second heating means is completed simultaneously, so that the amount of heat the tread region B1 receives from the second heating means is smaller than the amount of heat the side regions B2 receive from the first heating means. Thus a uniform degree of cure in the whole of the base tire B can be achieved by preventing overcure in the tread region B1 and undercure in the side regions B2.

That is, a difference in heating time by the first heating means and the second heating means may be created, so that the amount of heat the tread region B1 receives from the second heating means is smaller than the amount of heat the side regions B2 receive from the first heating means. And the first heating means and the second heating means may be controlled such that the amount of heat for heating the tread region B1 is lower than the amount of heat for heating the side regions B2.

It should be understood by those skilled in the art that, in the description of the curing machine 1 in all the foregoing embodiments, the heating medium for heating the tread region B1 is supplied from a common heat source supply means 80, but the arrangement may be such that the neighborhoods of the hump portions B4 are locally heated by electrically-heated wires or the like.

Also, the steam pathways 60A and 60B to be provided have been described as circumferentially continuous flow channels corresponding to the hump portions B4 of the green tire, but the steam pathways may be circumferentially divided into a plurality of parts. The point is, such an arrangement is permissible so long as it allows heating that makes the amount of heat given to the tread region B1 smaller than the amount of heat given to the side regions B2.

Also, where a cured bead filler is used in the bead region B3 of the green base tire B', supply of steam to the upper and lower platens 53 and 54 only from the heat source supply means 80 will supply an amount of heat to the upper and lower molds 51 and 52 only. And with the amount of heat of the upper and lower molds 51 and 52 conducted to the tread molds 55 and the bead molds 81, the tread region B1 and the bead regions B3, which have a thinner tire thickness to be cured, can be cured, so that a uniform degree of cure can be achieved for the green base tire B'.

Also, stainless steel has been cited as an example of low thermal conducting material, but the material may be admissible if it is of lower thermal conduction than that of the upper and lower molds 51 and 52. Also, the location of the material is not limited to the tread mold 55, but the material may be applied to the segment 56, the outer ring 57, and the like.

As thus far explained, a base tire B with a uniform degree of cure can be obtained by cure-molding a green base tire B' with the curing machine 1. And a tire with a uniform degree of cure as a whole can be manufactured by placing a cured tread A on the thus obtained base tire B.

In the foregoing specification, the invention has been described with reference to specific embodiments thereof. However, the technical scope of this invention is not to be considered as limited to those embodiments. It will be evident that various modifications and changes may be made thereto without departing from the scope of the claims.

### [Description of Reference Numerals]

- 1: curing machine
- 9: bladder
- 12: carcass
- 13-16: belt
- 20: base tread
- 51: upper mold
- 52: lower mold
- 53: upper platen
- 54: lower platen
- 55: tread mold
- 56: tread segment
- 57; 57A; 57B: outer ring
- 58A; 59A; 60; 60A; 60B; 60C: steam pathway
- 80: heat source supply means
- A: tread rubber
- B: base tire
- C: cushion rubber
- B1: tread region
- B2: side region
- B3: bead region
- B4: hump portion

## Claims

1. A method for manufacturing a tire, comprising the steps of:
a) manufacturing a cured base tire (B) having a tread region (B1) where a tread rubber (A) is to be attached by a method comprising the steps of:
enclosing an uncured base tire (B') within a curing mold;
heating side regions (B2) of the base tire (B') by a first heating means (53, 54);
heating a tread region (B1) with a thicker tire thickness than the side regions (B2) by a second heating means (57A, 57B); and
performing a cure-molding such that the amount of heat given to the tread region (B1) by the second heating means (57A, 57B) is smaller than the amount of heat given to the side regions (B2) by the first heating means (53, 54);
b) attaching a cured tread rubber (A) via an uncured cushion rubber (C) to the tread region (B1) of the cured base tire (B); and
c) forming the base tire (B) and the cured tread rubber (A) integrally together by curing the uncured cushion rubber (C).

2. A method for manufacturing a tire, comprising the steps of:
a) manufacturing a cured base tire (B) having a tread region (B1) where a tread rubber (A) is to be attached by a method comprising the steps of:
enclosing an uncured base tire (B') within a curing mold;
heating side regions (B2) of the base tire (B') by a first heating means (53, 54);
heating a tread region (B1) with a thicker tire thickness than the side regions (B2) by a second heating means (57A, 57B); and
performing a cure-molding by setting the temperature to be given by the second heating means (57A, 57B) to the tread region (B1) lower than the temperature to be given to the side regions (B2) by the first heating means (53, 54);
b) attaching a cured tread rubber (A) via an uncured cushion rubber (C) to the tread region (B1) of the cured base tire (B); and
c) forming the base tire (B) and the cured tread rubber (A) integrally together by curing the uncured cushion rubber (C).

3. The method for manufacturing a tire according to claim 1, wherein the amounts of heat given to the base tire (B') are increasingly smaller for the bead regions (B3), the side regions (B2), and the tread region (B1) in this order.

4. The method for manufacturing a tire according to claim 2, wherein the temperatures applied to the base tire (B') are increasingly lower for the bead regions (B3), the side regions (B2), and the tread region (B1) in this order.

5. The method for manufacturing a tire according to any of claims 1 to 4, wherein the thickness of the tread region (B1) including a base tread (20) is greater than the thickness of the side region (B2) when the base tread (20) to which a tread rubber (A) is attached is placed on the radially outermost position in the tread region (B1).

6. The method for manufacturing a tire according to claim 5, wherein the adhesion surface of the base tread (20) to which the tread rubber (A) is attached is formed in a flat surface or a curved surface.

7. The method for manufacturing a tire according to claim 5 or claim 6, wherein the adhesion surface of the base tread (20) to which the tread rubber (A) is attached is provided with a positioning means.

8. The method for manufacturing a tire according to any of claims 5 to 7, wherein the side rubber (19) forming the side region (B2) is made of the same material as the base tread (20).

9. The method for manufacturing a tire according to any of claims 5 to 7, wherein the side rubber (19) forming the side region (B2) is made of a material different from that of the base tread (20) .

10. The method for manufacturing a tire according to any of claims 1 to 9, wherein a low thermal conducting member is provided between the second heating means (57A, 57B) and the tread region (B1) .

## Patentansprüche

1. Verfahren zur Herstellung eines Reifens, umfassend die Schritte:
a) Herstellen eines ausgehärteten Basisreifens (B) mit einem Laufflächenbereich (B1), an dem ein Laufflächengummi (A) angebracht werden soll, durch ein Verfahren umfassend die Schritte:
Einschließen eines ungehärteten Basisreifens (B') in eine Aushärtungsform;
Erwärmen von Seitenbereichen (B2) des Basisreifens (B') durch ein erstes Heizmittel (53, 54);
Erwärmen eines Laufflächenbereichs (B1) mit einer dickeren Reifendicke als die Seitenbereiche (B2) durch ein zweites Heizmittel (57A, 57B); und
Durchführen eines Aushärtungsformens derart, dass die Wärmemenge, die dem Laufflächenbereich (B1) durch das zweite Heizmittel (57A, 57B) zugeführt wird, geringer ist als die Wärmemenge, die den Seitenbereichen (B2) durch das erste Heizmittel (53, 54) zugeführt wird;
b) Anbringen eines ausgehärteten Laufflächengummis (A) über einen nicht ausgehärteten Polstergummi (C) an dem Laufflächenbereich (B1) des ausgehärteten Basisreifens (B); und
c) Bilden des Basisreifens (B) und des ausgehärteten Laufflächengummis (A) integral miteinander durch Aushärten des nicht ausgehärteten Polstergummis (C).

2. Verfahren zur Herstellung eines Reifens, umfassend die Schritte:
a) Herstellen eines ausgehärteten Basisreifens (B) mit einem Laufflächenbereich (B1), an dem ein Laufflächengummi (A) angebracht werden soll, durch ein Verfahren umfassend die Schritte:
Einschließen eines ungehärteten Basisreifens (B') in eine Aushärtungsform;
Erwärmen von Seitenbereichen (B2) des Basisreifens (B') durch ein erstes Heizmittel (53, 54);
Erwärmen eines Laufflächenbereichs (B1) mit einer dickeren Reifendicke als die Seitenbereiche (B2) durch ein zweites Heizmittel (57A, 57B); und
Durchführen eines Aushärtungsformens durch Einstellen der Temperatur, die von dem zweiten Heizmittel (57A, 57B) auf den Laufflächenbereich (B1) zugeführt werden soll, niedriger als die Temperatur, die von dem ersten Heizmittel (53, 54) auf die Seitenbereiche (B2) zugeführt werden soll;
b) Anbringen eines ausgehärteten Laufflächengummis (A) über einen nicht ausgehärteten Polstergummi (C) an dem Laufflächenbereich (B1) des ausgehärteten Basisreifens (B); und
c) Bilden des Basisreifens (B) und des ausgehärteten Laufflächengummis (A) integral miteinander durch Aushärten des nicht ausgehärteten Polstergummis (C).

3. Verfahren zur Herstellung eines Reifens nach Anspruch 1, wobei die dem Basisreifen (B') zugeführten Wärmemengen für die Wulstbereiche (B3), die Seitenbereiche (B2) und den Laufflächenbereich (B1) in dieser Reihenfolge zunehmend geringer sind.

4. Verfahren zur Herstellung eines Reifens nach Anspruch 2, wobei die auf den Basisreifen (B') aufgebrachten Temperaturen für die Wulstbereiche (B3), die Seitenbereiche (B2) und den Laufflächenbereich (B1) in dieser Reihenfolge zunehmend niedriger sind.

5. Verfahren zur Herstellung eines Reifens nach einem der Ansprüche 1 bis 4, wobei die Dicke des Laufflächenbereichs (B1) mit einer Basislauffläche (20) größer ist als die Dicke des Seitenbereichs (B2), wenn die Basislauffläche (20), an dem ein Laufflächengummi (A) angebracht ist, an der radial äußersten Position im Laufflächenbereich (B1) angeordnet ist.

6. Verfahren zur Herstellung eines Reifens nach Anspruch 5, wobei die Haftfläche der Basislauffläche (20), an der das Laufflächengummi (A) angebracht ist, in einer flachen Oberfläche oder einer gekrümmten Oberfläche gebildet ist.

7. Verfahren zur Herstellung eines Reifens nach Anspruch 5 oder 6, wobei die Haftfläche der Basislauffläche (20), an der das Laufflächengummi (A) angebracht ist, mit einem Positionierungsmittel bereitgestellt ist.

8. Verfahren zur Herstellung eines Reifens nach einem der Ansprüche 5 bis 7, wobei der den Seitenbereich (B2) bildende Seitengummi (19) aus dem gleichen Material wie die Basislauffläche (20) hergestellt ist.

9. Verfahren zur Herstellung eines Reifens nach einem der Ansprüche 5 bis 7, wobei der den Seitenbereich (B2) bildende Seitengummi (19) aus einem Material hergestellt ist, das unterschiedlich von dem der Basislauffläche (20) ist.

10. Verfahren zur Herstellung eines Reifens nach einem der Ansprüche 1 bis 9, wobei ein Element mit geringer Wärmeleitfähigkeit zwischen dem zweiten Heizmittel (57A, 57B) und dem Laufflächenbereich (B1) bereitgestellt ist.

## Revendications

1. Procédé de fabrication d'un pneu, comprenant les étapes suivantes :
a) fabrication d'un pneu de base vulcanisé (B) comportant une région de bande de roulement (B1) où une gomme de bande de roulement (A) doit être fixée par un procédé comprenant les étapes suivantes :
disposition d'un pneu de base non vulcanisé (B') à l'intérieur d'un moule de vulcanisation ;
chauffage de régions latérales (B2) du pneu de base (B') par un premier moyen de chauffage (53, 54) ;
chauffage d'une région de bande de roulement (B1) ayant une épaisseur de pneu supérieure à celle des régions latérales (B2) par un second moyen de chauffage (57A, 57B) ; et
réalisation d'un moulage de vulcanisation de sorte que la quantité de chaleur fournie à la région de bande de roulement (B1) par le second moyen de chauffage (57A, 57B) soit inférieure à la quantité de chaleur fournie aux régions latérales (B2) par le premier moyen de chauffage (53, 54) ;
b) fixation d'une gomme de bande de roulement vulcanisée (A) par l'intermédiaire d'une gomme d'amortissement non vulcanisée (C) à la région de bande de roulement (B1) du pneu de base vulcanisé (B) ; et
c) formation du pneu de base (B) et de la gomme de bande de roulement vulcanisée (A) solidairement l'un de l'autre par vulcanisation de la gomme d'amortissement non vulcanisée (C).

2. Procédé de fabrication d'un pneu, comprenant les étapes suivantes :
a) fabrication d'un pneu de base vulcanisé (B) comportant une région de bande de roulement (B1) où une gomme de bande de roulement (A) doit être fixée par un procédé comprenant les étapes suivantes :
disposition d'un pneu de base non vulcanisé (B') à l'intérieur d'un moule de vulcanisation ;
chauffage de régions latérales (B2) du pneu de base (B') par un premier moyen de chauffage (53, 54) ;
chauffage d'une région de bande de roulement (B1) ayant une épaisseur de pneu supérieure à celle des régions latérales (B2) par un second moyen de chauffage (57A, 57B) ; et
réalisation d'un moulage de vulcanisation en réglant la température devant être fournie par le second moyen de chauffage (57A, 57B) à la région de bande de roulement (B1) plus basse que la température devant être fournie aux régions latérales (B2) par le premier moyen de chauffage (53, 54) ;
b) fixation d'une gomme de bande de roulement vulcanisée (A) par l'intermédiaire d'une gomme d'amortissement non vulcanisée (C) à la région de bande de roulement (B1) du pneu de base vulcanisé (B) ; et
c) formation du pneu de base (B) et de la gomme de bande de roulement vulcanisée (A) solidairement l'un de l'autre par vulcanisation de la gomme d'amortissement non vulcanisée (C).

3. Procédé de fabrication d'un pneu selon la revendication 1, dans lequel les quantités de chaleur fournies au pneu de base (B') diminuent progressivement pour les régions du talon (B3), les régions latérales (B2) et la région de bande de roulement (B1), dans cet ordre.

4. Procédé de fabrication d'un pneu selon la revendication 2, dans lequel les températures appliquées au pneu de base (B') diminuent progressivement pour les régions du talon (B3), les régions latérales (B2) et la région de bande de roulement (B1), dans cet ordre.

5. Procédé de fabrication d'un pneu selon l'une quelconque des revendications 1 à 4, dans lequel l'épaisseur de la région de bande de roulement (B1) comprenant une bande de roulement de base (20) est supérieure à l'épaisseur de la région latérale (B2) lorsque la bande de roulement de base (20) à laquelle est fixée une gomme de bande de roulement (A) est placée sur l'emplacement radialement le plus à l'extérieur de la région de bande de roulement (B1).

6. Procédé de fabrication d'un pneu selon la revendication 5, dans lequel la surface d'adhérence de la bande de roulement de base (20) à laquelle est fixée la gomme de bande de roulement (A) se présente sous la forme d'une surface plane ou d'une surface incurvée.

7. Procédé de fabrication d'un pneu selon la revendication 5 ou la revendication 6, dans lequel la surface d'adhérence de la bande de roulement de base (20) à laquelle est fixée la gomme de bande de roulement (A) est pourvue d'un moyen de positionnement.

8. Procédé de fabrication d'un pneu selon l'une quelconque des revendications 5 à 7, dans lequel la gomme latérale (19) formant la région latérale (B2) est faite du même matériau que la bande de roulement de base (20).

9. Procédé de fabrication d'un pneu selon l'une quelconque des revendications 5 à 7, dans lequel la gomme latérale (19) formant la région latérale (B2) est faite d'un matériau différent de celui de la bande de roulement de base (20).

10. Procédé de fabrication d'un pneu selon l'une quelconque des revendications 1 à 9, dans lequel un élément à faible conductivité thermique est prévu entre le second moyen de chauffage (57A, 57B) et la région de bande de roulement (B1).
